**Europäisches Patentamt**

**European Patent Office**

**Office européen des brevets**

(19)

(11) Veröffentlichungsnummer: **0 121 147**

**A1**

(12) # EUROPÄISCHE PATENTANMELDUNG

(21) Anmeldenummer: **84102539.8**

(22) Anmeldetag: **09.03.84**

(51) Int. Cl.³: **G 05 D 23/19**
**G 05 B 19/12, F 24 D 19/10**

(30) Priorität: **09.03.83 DE 3308252**

(43) Veröffentlichungstag der Anmeldung:
**10.10.84 Patentblatt 84/41**

(84) Benannte Vertragsstaaten:
**AT CH FR GB LI**

(71) Anmelder: **Noack, Rolf, Dr.**
**Altvaterstrasse 20**
**D-6330 Wetzlar-Steindorf(DE)**

(71) Anmelder: **Stephan, Ernst Wilhelm, Dipl.-Ing.**
**Kirchbergerweg 20**
**D-6301 Staufenberg(DE)**

(71) Anmelder: **Hubert, Helmut, Dr.-Ing.**
**Mühlweg 54**
**D-6331 Hohenahr(DE)**

(72) Erfinder: **Noack, Rolf, Dr.**
**Altvaterstrasse 20**
**D-6330 Wetzlar-Steindorf(DE)**

(72) Erfinder: **Stephan, Ernst Wilhelm, Dipl.-Ing.**
**Kirchbergerweg 20**
**D-6301 Staufenberg(DE)**

(72) Erfinder: **Hubert, Helmut, Dr.-Ing.**
**Mühlweg 54**
**D-6331 Hohenahr(DE)**

(54) **Mikroprozessor-Heizungsregler.**

(57) Einem Mikroprozessor-Heizungsregler (1) werden vorprogrammierte Datenspeicher in Form von einsteckbaren Modulen (3, 3') zugeordnet. Dabei wird der Anlage werksseitig ein Modul (3) mit einem Standardprogramm nach durchschnittlichen Erfahrungswerten beigefügt. Dieses ist bei Bedarf durch ein nach individuellen Werten des Betreibers programmiertes Modul (3') zu ersetzen.

— 1 —

### Mikroprozessor-Heizungsregler

Heizungsregler haben die Aufgabe, den Heizungsbetrieb den jeweils vorliegenden Bedingungen anzupassen. In Abhängigkeit von bestimmten Regelgrößen wie Außen-, Raum-, Kesselwasser- und/oder Brauchwassertemperatur wird eine Anzahl von Geräten wie Brenner, Mischer, Heizkreis- und/oder Speicherladepumpe betrieben. Dabei können ferner individuelle Daten des Betreibers, etwa der zeitliche Ablauf der einzelnen Regelfunktionen, von Bedeutung sein.

In steigendem Maß werden Mikroprozessoren für alle möglichen Anwendungsbereiche eingesetzt. Bei Heizungsregelungen besteht ebenfalls die Möglichkeit ihres Einsatzes, wobei eine große Anzahl von Regelfunktionen mit größerer Regelgenauigkeit als bisher üblich einbezogen werden können. Einen Regler dieser Art offenbart beispielsweise die DE-PS 28 55 227. In dem dort beschriebenen und dargestellten Regler sind zwei Festwertspeicher (ROM, RAM) integriert, von denen einer alle Berechnungs- und Serviceroutinen enthält, während veränderliche Daten wie Belegzeiten u. dgl. dem anderen Speicher mit wahlfreiem Zugriff zugeordnet sind.

Mikroprozessor-Heizungsregler der bekannten Art stellen den Besitzer, der sie optimal einsetzen will, vor große Probleme. Bereits das individuelle Programmieren des zeitlichen Ablaufs bei mehreren Geräten (Brenner, Pumpen, Mischer) mit unterschiedlichen Zeitprogrammen ist für ihn oft nicht mehr durchschaubar. Er ist in der Regel nicht in der Lage, den Speicher mit wahlfreiem Zugriff nach eigenen Daten zu programmieren.

Der Erfindung lag die Aufgabe zugrunde, auch das individuelle Programmieren eines Mikroprozessors und damit dessen Einsatz in einem Heizungsregler problemlos zu ermöglichen.

Der Regler gemäß der Erfindung besitzt das im Kennzeichen des Patentanspruches 1 genannte Merkmal. Während bisher im Regler ein Festwertspeicher, bei dem veränderliche Werte vom Betreiber auszutauschen waren, integriert war, besitzt der erfindungsgemäße Regler zugeordnete Datenträger in Form von einsteckbaren Modulen (z.B. PROM, EPROM). Diese Module können außerhalb des Reglers programmiert werden, was die gesamte Handhabe wesentlich erleichtert.

Es ist möglich, für verschiedene Kesseltypen und Heizungsanlagen die jeweils benötigten Module zu erstellen und zu lagern. Die Programmierung erfolgt dabei bezüglich der veränderlichen Daten nach durchschnittlichen Erfahrungswerten des Herstellers.

Beim Verkauf ordnet der Händler dem betreffenden Kessel bzw. der Anlage das dafür passende Modul mit einem Standardprogramm zu. Die Werkseinstellwerte werden
dann beim erstmaligen Betrieb der Anlage als Initialisierungswerte verwandt.

Falls der Betreiber einzelne Werte des Programmes, insbesondere die Daten der Schaltuhr, verändern möchte,
muß er nicht selbst die Umprogrammierung an Ort und
Stelle vornehmen bzw. vornehmen lassen. Er muß nur das
Standardmodul durch ein individuell programmiertes Modul
austauschen.

Der durchschnittliche Betreiber einer Heizungsanlage wird
nicht in der Lage sein, ein eigenes Modul zu erstellen,
ebenso wie er durch persönliche Eingriffe in die vorhandene Mikroprozessoer-Regelung überfordert wäre. Es
ist für ihn auch gar nicht nötig, das Modul selbst zu
programmieren. Unter Inanspruchnahme eines besonderen
Kundenservices muß er nur seine Wunschwerte in ein Formblatt eintragen und dieses Formblatt einer zentralen
Programmierstelle zusenden. Anhand der persönlichen Werte
wird mit Rechnerunterstützung ein individuelles Modul
erstellt. Mit diesem Modul hat der Betreiber dann die
Möglichkeit, sein eigenes Programm zu benutzen, ohne
selbst programmieren zu müssen.

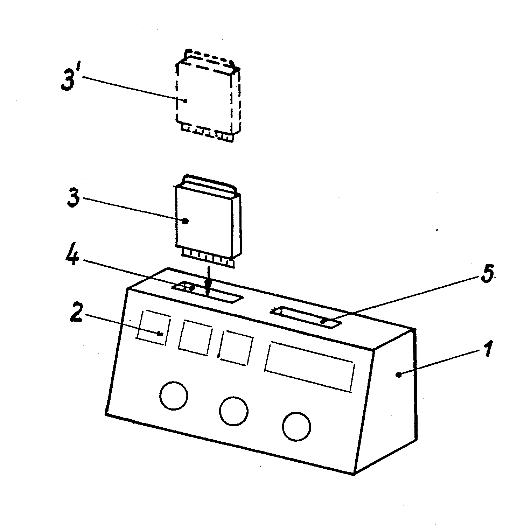

Die beigefügte Zeichnung stellt in einer einzigen Figur
eine perspektivische Darstellung eines Reglers als Ausführungsbeispiel der Erfindung dar.

Einem Regler 1 mit nur schematisch angedeutetem Skalenfeld 2 ist ein Modul 3 zugeordnet. Er besitzt alle für das Betreiben notwendige Daten und Standardwerte und wird in eine Steckbuchse 4 eingeschoben. Ein Austauschmodul 3', der auf Anforderung des Betreibers mit individuellen Daten bezüglich der Uhrzeit oder sonstiger kessel- und anlageunabhängiger Werte versehen wurde, ersetzt bei Bedarf den Modul 3. Dieser wird dann in einer Leerbuchse 5 eingeschoben und dort aufbewahrt.

Patentansprüche

1. Mikroprozessor-Heizungsregler mit einem oder mehreren Regelkreisen und einer Schaltuhr, gekennzeichnet durch einen oder mehrere dem Regler (1) zugeordnete, entsprechend dem Kessel- und Anlagetyp vorprogrammierte Datenträger in Form von einsteckbaren Modulen (3, 3').

2. Mikroprozessor-Heizungsregler nach Anspruch 1, gekennzeichnet durch ein werkseitig dem Regler (1) zugeordnetes, ein Standard-Programm nach durchschnittlichen Erfahrungswerten enthaltendes Modul (3).

3. Mikroprozessor-Heizungsregler nach den Ansprüchen 1 und 2, gekennzeichnet durch ein vom Betreiber bei Bedarf gegen das Modul (3) austauschbares, ein individuelles Programm, insbesondere bezüglich der Daten der Schaltuhr enthaltendes Modul (3').

0121147

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 916 748 (SOLEA GMBH) * Patentansprüche 1, 11; Seite 9, Absatz 1 * | 1 | G 05 D 23/19 G 05 B 19/12 F 24 D 19/10 |
| | --- | | |
| Y | WO-A-8 103 233 (J. POLSTER) * Zusammenfassung; Figur 2 * | 1 | |
| A | | 3 | |
| | --- | | |
| D,A | DE-A-2 855 227 (HONEYWELL GMBH) * Figur 1; Patentansprüche * | 1 | |
| | --- | | |
| A | FR-A-2 385 178 (A. COURTOIS) | | |
| | ----- | | RECHERCHIERTE SACHGEBIETE (Int. Cl. ³) |
| | | | G 05 D 23/00 G 05 B 19/12 F 24 D 19/10 |

Der vorliegende Recherchenbericht wurde für alle Patentansprüche erstellt.

| Recherchenort BERLIN | Abschlußdatum der Recherche 04-06-1984 | Prüfer BEYER F |
|---|---|---|